# EUROPEAN PATENT APPLICATION

(11) **EP 4 080 484 A1**
(43) Date of publication of application: **26.10.2022**
(21) Application number: 21382342.0
(22) Date of filing: 20.04.2021
(51) Int. Cl.: G08G 5/00, G06N 20/00, G08G 5/04

(54) **METHOD AND SYSTEM FOR GENERATING A TRAINING DATA SET TO TRAIN AN ARTIFICIAL INTELLIGENCE MODULE FOR ASSISTING AIR TRAFFIC CONTROL**

(71) Applicant: Databeacon S.L., 28004 Madrid (ES)
(72) Inventor: QUINTANA, Alberto, Tbilisi (GE); CRISTOBAL, Samuel, Madrid (ES); MARTINEZ, Darío, Madrid (ES); FERNÁNDEZ, Antonio, Madrid (ES); NEIRA, Eugenio, Madrid (ES); PÉREZ, David, Madrid (ES)
(74) Representative: Elzaburu S.L.P.

(57) **Abstract**

Method for generating a training data set to train an artificial intelligence module for assisting air traffic control, the method comprising the following steps:
• providing afirst layerof historical flight data comprising trajectory data of aircrafts, said trajectory data comprising track data, flight level data or speed data along time steps (t) of the trajectory,
• detecting a change in the trajectory data, the change occurring at a time step t₂ along the trajectory, in either track data, flight level data or speed data of at least an aircraft,
• labelling by a labelling module in a time or distance t₁ located before t₂ in the trajectory of the aircraft with the detected change such that said detected change is configured to correspond with an instruction given by an air traffic controller to said aircraft, the labelled historical flight data generating atraining data set for the artificial intelligence module.

## Description

### FIELD OF THE INVENTION

The present invention refers to a system and a method to generate training data for training Artificial Intelligence (Al) algorithms for assisting air traffic control (ATC). The present invention relates to systems and techniques for Machine Learning (ML) in ATC. More specifically, the present invention relates to techniques for the generation of training data for air traffic control assistants, virtual or physical.

### BACKGROUND OF THE INVENTION

Air traffic controllers using machine learning models will rely on a complete and good quality dataset to train the models. Collecting, cleaning, merging and verifying the quality of the data is typically very important. Also annotating, i.e., labelling, is critical to have a complete dataset that replicates the thinking process of air traffic controllers when they do their job.

Having data annotated with the instructions given by air traffic controllers to every flight can be specially challenging as controllers' instructions are not available in a manageable dataset and often not available at all.

Data has to be annotated in a way that makes them usable as training data to create an assistant to air traffic control for the following functions F1, F2, F3:
- F1, to ensure safe and efficient separation in controlled airspace,
- F2, to adequate the flights to the stage of their flight plans, for example, to descend an aircraft when it is close to destination, and,
- F3, to meet the contour restrictions, such as, letters of agreement with adjacent units, avoiding active military areas, etc.

A fully processable dataset of ATC instructions is not available. The great majority of ANSPs (Air Navigation Service Provider) don't keep the ATC instructions, when included on the electronic strip or ATC console labels, in a way it can be easily processed.

Some attempts to generate training data involving speech recognition techniques from instructions provided by ATCO (Air Traffic Controller) are known to have been made. But these attempts have been in the most part unsuccessful.

### SUMMARY OF THE INVENTION

The claimed invention relates to the development and deployment of methods and systems for preparing the data necessary to train artificial intelligence algorithms to assist air traffic controllers in issuing instructions to aircrafts.

Particularly, the training data shall be usable for the training of algorithms that allow the assistance to air traffic controllers on the previously mentioned three different functions:
- to ensure safe and efficient separation in controlled airspace (F1),
- to adequate the flights to the stage of their flight plans (F2), for example, to descend an aircraft when it is close to destination, and,
- to meet the contour restrictions (F3), such as, letters of agreement with adjacent units, avoiding active military areas, etc.

Systems and methods for obtaining training data are claimed and described herein.

The goal of the claimed invention is to obtain a dataset that contains air traffic controllers' instructions to train an artificial intelligence module. More specifically, the goal is to obtain a curated dataset attached with the adequate features (i.e., data variables) and labels that mimics all the information a human air traffic controller uses in his job.

In order to have usable training data for air traffic control support, a number of features or data variables needs to be computed, as they represent key information of what an air traffic controller assistant would need.

In air traffic control, flight data or flight surveillance data, i.e., the movement of aircrafts in the air described by its trajectory, which includes track (or projection of the path of the aircraft on the ground, the direction of which path at any point is usually expressed in degrees from North) and flight level or altitude, and speed are known. Other data or basic features are also easily available from flight plan data basis, as origin, destination (or routes in the air), planned flight level, etc. Except in certain emergency cases, traffics in controlled airspace can only maneuver following ATC instructions.

It is an object of the invention a method for generating a training data set to train an artificial intelligence module for assisting air traffic control,
To train the algorithm, the claimed method detects the instructions the ATCOs have provided in the past (historical data). For that, the claimed method and system provide a methodology to massively create a verified dataset comprising ATC instructions.

The detection of potential instructions is based on the changes in trajectories observed in historical data. Therefore, according to the claimed invention, the ATC instructions are inferred by tracking the behavior of the aircraft.

For instance, if it is observable in the data the descend of an aircraft XXX from flight level 320 to flight level 280, it is assumed that the following instruction was given: "XXX descend to flight level 280".

The claimed method comprises the following steps:
- providing afirst layer of historical flight data comprising trajectory data of aircrafts, said trajectory data comprising track data, flight level data or speed along time steps (t) of the trajectory, being the trajectory the projection of the path on ground that an aircraft follows as it moves.
- detecting a change in the trajectory data, the change occurring at a time step t₂ along the trajectory, in either track data, flight level data or a speed data of at least an aircraft,
- labelling by a labelling module in a time or distance t₁ located before t₂ in the trajectory of the aircraft with the change detected such that said detected change is configured to correspond with an instruction given by an air traffic controller to said aircraft, the labelled historical flight data generating a training data set for the artificial intelligence module.

The track direction is estimated from geographical coordinates (latitude, longitude) of last two points received as sometimes the actual heading data cannot be obtained.

The claimed method creates a first dataset capable to be used to train a supervised machine learning algorithm to achieve the functions mentioned above, F1, F2 and F3.

ATC airspace of each ANSPs is different but there are common grounds in the way ATCOs perform their jobs everywhere in the world. When an automatic massive validation of processes, data, features... can be achieved working with a certain ANSP, a methodology to transfer this knowledge to other ANSPs can occur. This method makes it possible to work independently of the kind of data available in each different airspace.

In an embodiment, the method object of the invention comprises:
- A data pipeline, to ingest historical aircraft operations data from surveillance systems ADS-B (Automatic Dependent Surveillance - Broadcast) and optionally the airplanes themselves, like radar, or data from the ATC console, Flight Management Systems (FMS) data (mode S), fuel emissions models, etc.
- A methodology to detect and additionally validate the instructions given by air traffic controllers (i.e., the Air Traffic Control instructions or ATC instructions) using algorithms to detect the given instructions by detecting changes in the trajectory. Inputs from the air traffic controllers in the console (sometimes called "electronic strip") or other data, when available, are used for verifying the detected instructions.

- A methodology to annotate or label historical data, i.e., aircraft trajectories, with all relevant information needed to train an algorithm that serves to the functions F1 , F2, F3 above. This is performed by an ATC instructions labelling module. This annotation technique includes labelling the detected ATC instructions in the relevant part of the trajectory, origin and destination of the flights, environmental impact such as fuel burnt due to the instructions. More additional data sources and models may be necessary at this stage.
- A human-in-the-loop methodology (or active learning) to refine the data annotated by the previous methodology and improve the enriched historical operations training dataset for air traffic control. The human may be a trained operational expert, typically an air traffic controller.

In an embodiment, the method further includes the method to detect the total change of altitude and/or track direction. It also includes the verification process through mode-S, electronic strip or through the ATCO in-the-loop, as already mentioned.

According to the above, the quality of the instructions detected, and the parameters applied can be verified comparing the detected instructions with flight management information given from, for instance, Mode-S. In addition, the verification and adjustment of the detection algorithm would be enhanced with actual logs of instructions given by providers when available and with feedback from operational stakeholders via ATCO- in-the- loop.

After this first dataset comprising the basic data attached to every aircraft (position, altitude, speed, etc...) and the detection of the given ATC instructions, in an embodiment another set of features which will try to mimic what the controller was thinking at the time of giving the instructions is provided. For instance, before clearing to descend a traffic, a controller should have checked that the traffic did not have any other traffic under it. These set of features are called smart features.

It is also an object of the present invention a data processing unit for training an artificial intelligence module, the data processing unit being configured to:
- provide a first layer of historical flight data comprising trajectory data of aircrafts, said trajectory data comprising track data, flight level data or speed data along the time steps (t) of the trajectory,
- detect a change in the trajectory data, the change occurring at a time step t₂ along the trajectory, in either track data, flight level data or speed data of at least an aircraft,
- label by a labelling module in a time or distance t₁ located before t₂ in the trajectory of the aircraft with the change detected such that said change is configured to correspond with an instruction given by an air traffic controller to said aircraft, the labelled historical flight surveillance data generating a training data set for the artificial intelligence module.

Finally, the trained algorithm can be deployed in an Air Traffic Control System by either providing recommendations of specific instructions to air traffic controllers or by sending them directly to the airplanes involved through data communication (e.g., through CPDLC - Controller Pilot Data Link Communication).

It is also an object of the present invention a device for assisting air traffic control, the device being configured to:
- provide a first layer of historical flight data comprising trajectory data of aircrafts, said trajectory data comprising track direction, flight level or speed along the time steps (t) of the trajectory,
- detect a change in the trajectory data at a time step t₂ along the trajectory in at least a track direction data, a flight level data or a speed data of at least an aircraft,
- label by a labelling module in a time or distance t₁ located before t₂ in the trajectory of the aircraft with the change detected such that said change is configured to correspond with an instruction given by an air traffic controller to said aircraft, the labelled historical flight surveillance data generating a training data set for the artificial intelligence module,
- provide an assessed air traffic control instructions using the artificial intelligence module.

### DESCRIPTION OF THE FIGURES

To complete the description and to provide for a better understanding of the invention, a set of drawings is provided. Said drawings form an integral part of the description and illustrate preferred embodiments of the invention. The drawings comprise the following figures.
Figure 1 shows a block diagram of an embodiment of the method object of the invention.
Figure 2 depicts an embodiment showing flight data comprising the trajectory of two aircrafts, one of which comprises a change in track direction and annotation of the corresponding label into the trajectory.
Figure 3 depicts the embodiment of figure 2 showing a second layer comprising the annotation of smart features.

### DETAILED DESCRIPTION OF THE INVENTION

As stated before, effective machine learning techniques rely upon training the adequate datasets, therefore the access to training data is a major constraint. By identifying and collecting training data, a deep learning system can learn and be re-trained to mimic the air traffic controller's actions.

To detect ATC instructions in historical datasets, initial data is fed to an algorithm and the outcome, once verified, will be used to train the artificial intelligence algorithm.

### Sources

As previously explained, to create the initial dataset, ADS-B (Automatic Dependent Surveillance - Broadcast) is the most important source of data for tracking airplanes. Sometimes it includes data from the mode-S of the planes. Currently, ADS-B covers most of the traffic. The traffic which is not detected in the ADS-B and detected by other means, such as flight plan data, radar data or by abnormal maneuvers from traffic in the vicinity, has to be studied separately and added to the dataset later. When accessible, ADS-B will be merged with radar data obtained from ANSPs (Air Navigation Service Provider), flight plan data from Eurocontrol or similar, airlines, etc. Obtaining mode-S data, even not for all aircrafts can be very useful later to access the winds at high levels (directly or indirectly by observing ATC instructions and the behavior of the projection on the ground) and to verify ATC instructions.

### ATC instructions

To train the algorithm, the claimed method detects the instructions the ATCOs have provided in the past (historical data). The detection of potential instructions is based on the changes in trajectories observed in ADS-B historical data. For that, the claimed method massively creates a verified dataset with ATC instructions.

Changes in trajectory and flight level are calculated independently. In an embodiment, the methodology applied to detect changes for a given flight is described in the following steps:
1 - Calculate discrete derivatives of altitude, track direction and speed for every time step. These discrete derivatives are approximations of turn rate (deg/s) and climb or descend rate (ft/min) and speed. Speed will change only when one aircraft follows another aircraft.
2 - Comparing the discrete derivative to a given threshold to detect if a change is occurring.
   More specifically, categorize if the trajectory dimension, for instance, altitude or track direction, is stable or varying by comparing the discrete derivative to a given threshold. I.e., turning if |turn rate| > 0.25 deg/seg and stable otherwise. Or climbing/descending if |vertical rate| > 100 ft/min and stable otherwise.
   If a change is detected, different embodiments are possible.
3.1 - Calculating the cumulative change during a given change phase, said cumulative change being the labelled data of the instructions given by the controller.
   - Identify flight change phases between stabilized regimes. An example for track direction changes could be defined by the following sequence: stable > turning > stable. Likewise, an example of phase for altitude changes could be stable > climbing > stable.
   - Calculate the cumulative change during a given change phase. Additionally, discretize it into, for instance, multiples of 5 degrees in case of changes in direction or multiples of 10 FLs (1000ft).
3.2 - Alternatively, the result of the change, i.e. , the final value, is the labelled data of the instructions given by the controller. after a change phase of discrete derivates over the given threshold, the result of the change in altitude, track or speed is the labelled data.
3.3 - A combination of the above data is also possible. The instruction detected can be defined by the cumulative change and the initial and final values of track direction or FLs. For instance, turn right 10 degrees from 280 to 290, or descend 40 FLs from FL320 to FL280.

In an embodiment, the instructions calculated, through the above algorithm, or other algorithm, are verified to make sure they are consistent with reality. A verification process through mode-S, electronic strip, as already mentioned, or through the ATCO in-the-loop is included in the methodology.

The claimed invention allows the creation of a method able to choose, label, verify and use the necessary features to mimic the actions of air traffic controllers. To verify that the datasets are coherent with reality, the features are correctly labelled, the instructions correctly detected, and the solutions are the ones the best controllers would provide.

In an embodiment, the quality of the instructions detected, and the parameters applied can be verified comparing the detected instructions with flight management information given from Mode-S. Mode-S is input data provided by the pilot to the aircraft. These data, when available, can be used for verification.

Alternatively, the verification and adjustment of the detection algorithm would be enhanced with actual logs of instructions given by providers, usually by data inserted directly by ATCOs on the electronic strip of the ATC console, when available or with feedback from operational stakeholders via ATCO-in-the-loop.

In an embodiment, ATCOs in-the-loop will be needed to verify the data. In simple words this means that a group of air traffic controllers should visualize what the algorithm is detecting and verify that the instructions detected are the ones they think were given to the planes. In order to visualize these traffic scenarios an interface to facilitate the verification process for real air traffic controllers is advisable.

To include ATCOs in-the-loop this interface:
- Shows a representation of the flights similar to an ATCO console, including information about the callsign, flight level, ground speed..., with the only purpose to ease the verification process for the ATCOs.
- Presents in common writing or through visual tools what the algorithm is doing so that the controllers could verify it is correct, for instance, ATC instructions detected, but also the verification of the smart features showing it has checked potential conflicts at other levels or tracks for the action detected or suggested.
- Includes a communication widget to facilitate the verification signaling when certain cases need further studying.
- Ranks conflicts and scenarios with a card system to expedite their analysis. Also, the interface is designed to work remotely, and it is able to be run in the most common platforms.

The advantage of the verification method of ATC instructions involving Mode S is that controllers are barely needed to verify the detected instructions, saving time when performing the validating process as it can be done massively, just comparing two datasets:
- The dataset of instructions the pilot introduced in his FMS (aboard system) and kept in the data coming from the Mode S (when included by the ADS-B provider).
- The dataset of instructions detected as claimed by inference when a change in the trajectory or flight level was detected.

Except in special cases (mistakes by the pilot or conditional instructions) both datasets should show the same instructions. For these special cases, the controller in-the-loop will be needed.

In any case, the visual interface for the verification process will be used by the ATCOs in-the-loop for the final result of the ML algorithm. When the algorithm provides a solution to a traffic situation, acontroller should verify if this solution is a good solution or it is bad one, or perhaps if it needs additional study. Here we are not referring to verifying the detected instructions from historical data but validating the new solutions provided by the algorithm.

In an embodiment, in the context of machine learning algorithms, additionally a method to label the necessary datasets to mimic the actions (F1, F2 and F3) of an air traffic controller is deployed. This includes labelling second layer datasets, meaning, training datasets labelled after being fed to a previous machine learning process:
Initial dataset >> ML1 >> second layer dataset: smart dataset>> ML2>> outcome.

In particular, in orderto mimic what a controller would do, a second layer of curated datasets should capture the thoughts of an air traffic controller before executing an instruction, for instance, verifying that if a change of flight level is needed, there would be no potential conflicts at the flight levels involved (intermediate and final). To fine tuning the final stages, more layers can be used. This second layer should include what it is named smart features.

Also, this second layer of curated datasets captures the thoughts of an air traffic controller before executing an instruction, for instance, verifying that if a change of flight level is needed, there would be no potential conflicts at the flight levels involved (intermediate and final).

### Smart features

One essential part of a good machine learning (ML) model is the selection of the dataset features. The first loops include basic features, such as, ground speed, flight level or altitude, origin and destination, callsign, etc...

However, after this first approach (ML1), new smart features are added to the historical data trying to capture the thoughts of an air traffic controller before executing an instruction. An arithmetic conflict detector, i.e. a potential conflict detector, is used to calculate potential losses of separation but has extended its use to check potential positions of the planes before actually given an ATC instruction.

The potential conflict detector checks potential conflicts at other levels or tracks of the aircraft and the result of at least one of these checks is annotated as smart feature.

The smart feature is labelled in a time step t₃ in the trajectory of the aircraft, the smart feature comprises the potential conflicts with aircrafts around when a maneuver is necessary in a traffic scenario. t₃ is located before t₂ in the trajectory of the aircraft.

For instance, it attaches a smart feature to an aircraft YYY who might need a change of level from flight level 350 to 330 that checks that if YYY was at any level between 350 and 330, it would be clear of conflicts. These smart features are also extended to changes of track and speed. Once these smart features are added, a second round of re-training (ML2) will follow. To fine tuning the final stages, more layers can be used.

The smart features are only calculated when some triggers happen: 1. when there is a potential conflict (the potential conflict detector gets activated within a range of parameters explained below). 2. when a maneuver is necessary to comply with some operational requests or restrictions such as a letter of agreement with an adjacent u nit, or 3. when the traffic participates in another traffic's smart feature. They remain until the trigger issue has been resolved.

The reason to use triggers to add these smart features is to solve a potential computational problem. Determining each smart feature requires a full set of algorithms, therefore it is more efficient to calculate them only when they might be used. For example, if a flight is getting closer to destination and will be needing to descend soon, it makes sense to check all the planes under to see if it is safe to descend to the appropriate level, but also the ones around him in case it is not safe to immediately descend and the aircraft needs to maneuver first.

### Parameters

When trying to mimic ATCO's actions, a ML system should use a set of defined parameters attached to most of the features. For instance, how far in advance should the system start detecting conflicts?, when do aircrafts normally start descending to comply with a letter of agreement?, or since an ATC instruction is received, when is the maneuver actually executed?

As ATCOs work in sectors or predefined volumes of the airspace, they need to be ready to receive incoming traffic some minutes/miles in advance -parameter-, therefore it makes sense to start "activating" the conflict detection when a controller does it in the ops room.

To make these parameters (usually described in terms of time or distance) realistic, two approaches have been used:
∘ When possible, the necessary parameters have been measured in some 100's of examples from the control room or they have directly been defined by air traffic controllers based on their experience. After averaging the safest options, they have been translated to the ML features and/or algorithm when appropriate. For instance, a controller instructs an airplane to turn right and the actual turn is observed after 15 seconds as an average when observed in the operational room.
∘ Also, the parameters have also been calculated from the historical data analysis, such as normal rates of descend or climb depending on the temperature, etc.

### Environmental aspects

Within the safety range, it is obvious that the more environmentally friendly an ATC solution is the better for the airlines and society in general. To calculate the impact of an ATC maneuver there are many variables to take into account, such as type of airplane, type of engines, flight level, weight, temperature, winds and so on. Adding a verified dataset with most of the variables mentioned above gives an indication of the extra fuel used after complying with the instruction. The algorithm can weight this feature to be biassed towards the most environmentally friendly instructions.

### Figures

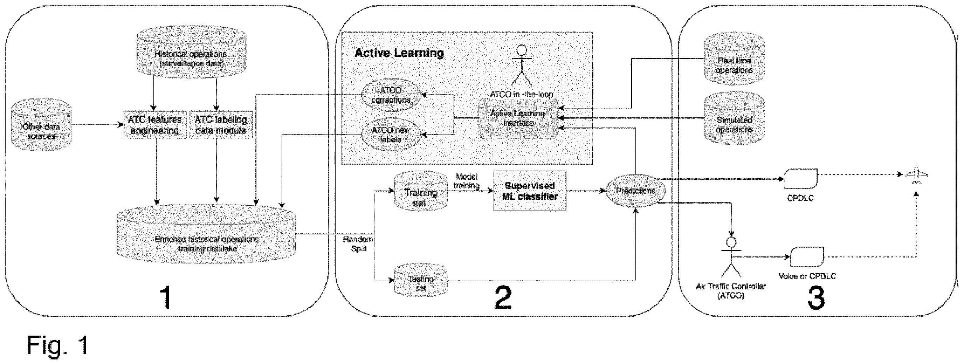

Figure 1 provides from left to right the following information:
A block 1 shows the process of getting historical data from different sources, merging it and labelling it to be used as a training set for an artificial intelligence algorithm.

The lower part of block 2 illustrates how to train the machine learning algorithm after verifying the data set. The outcome will be the predictions in the form of air traffic control instructions.

The upper part of block 2, the active learning block, includes the figure of an air traffic controller (or other expert in air traffic operations) validating the predictions and making the necessary corrections (ATCO in-the-loop).

A block 3 adds data from real time operations and data from simulated operations to the machine learning process and the actual use of the predictions by the ATC system.

As shown in figure 1, from left to right, the method starts merging and formatting all the necessary and available data and verifying it through a visual interface. From here it will start labeling the features the controllers do to do their job.

In general, it will use algorithms to find the smart features controllers use before instructing the flights. This will create the second layer dataset.

Again, everything will be verified by ATCO's using the visual interface. In some specific cases, more transformations of the second smart dataset will be needed.

Once obtained all the necessary labelled features, the machine learning algorithm will run to find the instructions controllers would provide, first with historical data and synthetic data if needed, and then with real-time traffic. The controller in-the-loop will constantly be verifying the solutions and analyzing when the method proposals are different from the controllers', if they are reasonable, more efficient or the system needs some refining. With every instruction, the method gives a metric to value the environmental impact and the efficiency of the solution.

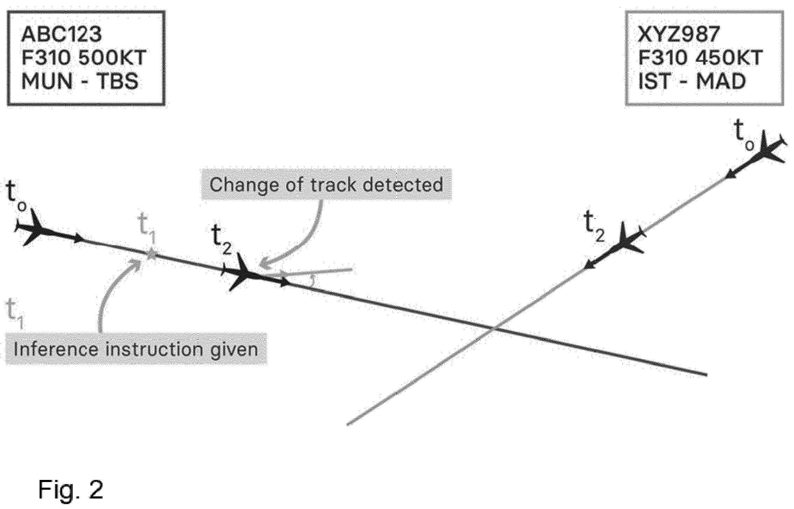

Figure 2 discloses the trajectories of two aircrafts, ABC123, from Munich Airport to Tiflis Airport and XYZ987 from Istanbul Airport to Madrid Airport. Both are flying at 310 with a speed of 500 kt and 450 kt, respectively. The above data are the basic features available in the ADS-B data.

A change in the trajectory data of ABC123 is detected at t₂. The change relates to track data. The trajectory of ABC123 is labelled at a time t₁ with the detected change corresponding to the instruction given by an air traffic controller to said aircraft.

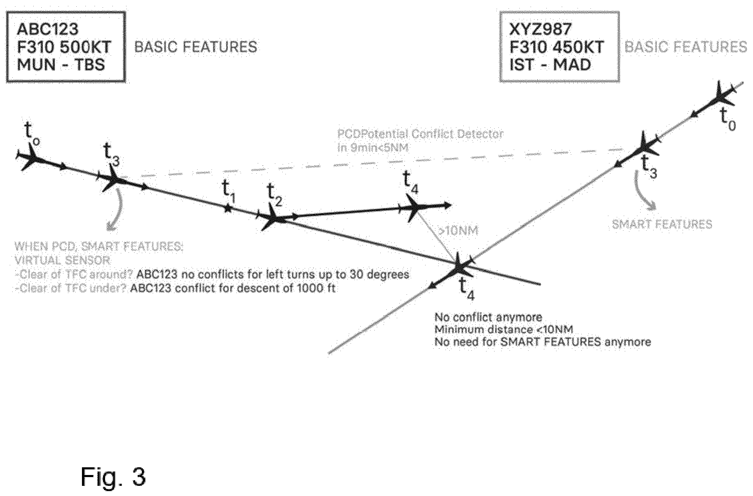

Figure 3 discloses the trajectories of the two aircrafts comprising also the smart features annotated. The smart features are annotated at a time step t₃ located before t₂ in the trajectory and comprise the potential conflicts with aircrafts around when a maneuver.

The potential conflict detector (PCD) detects aconflict between both aircrafts in t₃. Specifically, both aircrafts will be located under 5NM in 9 minutes.

When the potential conflict detector (PCD) detects said conflict, it performs track and/or level and/or speed checks within a set range. The result of these checks is labelled as smart feature. This feature is labelled at t₃ and it is kept until the conflict is solved at t₄.

For instance, for aircraft ABC123 the PCD checks that if ABC123 turns virtually left up to 30 degrees, there will be no conflict with other traffic. It checks traffic around.

It may also check traffic below the aircraft level: for aircraft ABC123 the PCD checks if ABC123 virtually descends 1 000ft, there will be no conflict with other traffic.

### Advantages of the invention

In short, the advantages of the invention are the following:
1. A method to merge and label data from different aeronautical datasets, included but not limited to flight plan data, meteorological data, FMS data (mode S), radar data, and ADS-B data.
2. A method to detect the instructions given by air traffic controllers using algorithms applied on historical data, which includes an automatic verification process if FMS data or data from the controller's electronic strip is available, or a controller-in the-loop verification mechanism if it is not.
3. A method to create synthetic traffic to train the algorithm based on actual trajectories and types of aircrafts, when needed.
4. A machine-learning-based method to mimic the instructions controllers would provide when managing air traffic, included but not limited to vectoring to the tail for separation, parallel vectoring to allow aircrafts to climb or descend, changing flight level for separation or to accommodate the airplane to the stage of its flight plan after verifying no other traffics are going to be involved, fulfilling letters of agreement with other units, etc.
5. A method to include air traffic controllers to verify detected potential conflicts, detected instructions and recommended instructions.
6. A HMI (Human Machine Interface) designed to verify the selection and labelling of data and features in terms of machine learning which
   a. represents the evolution of the flights,
   b. shows an advance fully customizable conflict alert system with additional features for controllers' verification,
   c. can be run remotely,
   d. shows the detected instructions with additional features for controllers' verification,
   e. ranks potential conflicts by priority to facilitate particular case studies,
   f. includes a system of cards to study specific moments or scenarios,
   g. shows the recommended instructions with additional features for controllers' verification,
   h. adds a communication tool to report specific cases outside the platform,
   i. additional requisites.
7. A method to deploy the outcome of the machine-learning algorithms in the air traffic control room, either as an auxiliary interface for planner or executive controllers, or an integrated part of a third-party ATC system. The instructions are designed in normal aeronautical format so that they can be sent automatically to aircrafts through CPDLC, if desired.

## Claims

1. Method for generating a training data set to train an artificial intelligence module for assisting air traffic control, the method **characterized in that** it comprises the following steps:
• providing a first layer of historical flight data comprising trajectory data of aircrafts, said trajectory data comprising track data, flight level data or speed data along time steps (t) of the trajectory,
• detecting a change in the trajectory data, the change occurring at a time step t₂ along the trajectory, in either track data, flight level data or speed data of at least an aircraft,
• labelling by a labelling module in a time or distance t₁ located before t₂ in the trajectory of the aircraft with the detected change such that said detected change is configured to correspond with an instruction given by an air traffic controller to said aircraft, the labelled historical flight data generating a training data set for the artificial intelligence module.

2. Method for generating a training data set, according to claim 1, wherein the step of detecting a change comprises the following steps:
∘ calculating discrete derivatives of altitude, track or speed for every time step (t),
∘ comparing the discrete derivative to a given threshold to detect if a change is occurring,
∘ if a change is detected, calculating the cumulative change during a given change phase, said cumulative change being the labelled data.

3. Method for generating a training data set, according to claim 1 or 2, wherein the step of detecting a change comprises the following steps:
∘ calculating discrete derivatives of altitude, track or speed for every time step (t),
∘ comparing the discrete derivative to a given threshold to detect if a change is occurring,
∘ after a change phase of discrete derivates over the given threshold, the result of the change in altitude, track or speed is the labelled data.

4. Method for generating a training data set, according to any preceding claim, wherein the first layer of historical flight data comprises data from Automatic Dependent Surveillance - Broadcast (ADS-B).

5. Method for generating a training data set, according to any preceding claim, wherein the detected labels are verified by comparing them with historical Flight Management System (FMS) data obtained by Mode-S or historical data instructions provided by air traffic controllers on an electronic strip of an ATC console.

6. Method for generating a training data set, according to any preceding claim, wherein it comprises a step in which an air traffic controller is provided for verifying the labelled data.

7. Method for generating a training data set, according to any preceding claim, wherein it comprises the step of labelling by the labelling module a second layer dataset annotating a smart feature located in a time step t₃ in the trajectory of the aircraft, the smart feature comprising the potential conflicts with aircrafts around when a maneuver is necessary in a traffic scenario.

8. Method for generating a training data set, according to claim 7, wherein the smart features are annotated to the trajectory when a trigger exists, being the trigger at least: a potential conflict or an operational o restriction request detected by a potential conflict detector.

9. Method for generating a training data set, according to claim 8, wherein the smart features are annotated to the trajectory until the conflict has been resolved.

10. Method for generating a training data set, according to any preceding claim 8 or 9, wherein the potential conflict detector checks potential conflicts at other levels or tracks of the aircraft and the result of at least one of these checks is annotated as smart feature.

11. Method for generating a training data set, according to any preceding claim 7 to 10, wherein t₃ is located before t₂.

12. A data processing unit for training an artificial intelligence module, the data processing unit **characterized in that** it is configured to:
• provide a first layer of historical flight data comprising trajectory data of aircrafts, said trajectory data comprising track data, flight level data or speed data along the time steps (t) of the trajectory,
• detect a change in the trajectory data, the change occurring at a time step t₂ along the trajectory, in either track data, flight level data or speed data of at least an aircraft,
• label by a labelling module in a time or distance t₁ located before t₂ in the trajectory of the aircraft with the change detected such that said change is configured to correspond with an instruction given by an air traffic controller to said aircraft, the labelled historical flight surveillance data generating a training data set for the artificial intelligence module.

13. A device for assisting air traffic control, the device **characterized in that** it is configured to:
• provide a first layer of historical flight data comprising trajectory data of aircrafts, said trajectory data comprising track direction, flight level or speed along the time steps (t) of the trajectory,
• detect a change in the trajectory data at a time step t₂ along the trajectory in at least a track direction data, a flight level data or a speed data of at least an aircraft,
• label by a labelling module in a time or distance t₁ located before t₂ in the trajectory of the aircraft with the change detected such that said change is configured to correspond with an instruction given by an air traffic controller to said aircraft, the labelled historical flight surveillance data generating a training data set for the artificial intelligence module,
• provide an assessed air traffic control instructions using the artificial intelligence module.
